# EUROPEAN PATENT APPLICATION

(11) **EP 4 839 001 A1**
(43) Date of publication of application: **11.11.2026**
(21) Application number: 25175372.9
(22) Date of filing: 09.05.2025
(51) Int. Cl.: H04W 76/12, H04W 76/15, H04L 1/1607, H04L 65/1069, H04L 65/1016, H04L 1/1867, H04L 12/46, H04L 45/02, H04L 45/28, H04L 61/106, H04L 69/22, H04W 28/02, H04W 28/12, H04W 28/24, H04W 40/24

(54) **DEVICE AND METHOD FOR COMMUNICATING TRAFFIC HAVING MULTIPLE TRAFFIC COMPONENTS**

(71) Applicant: NTT DOCOMO, INC., Tokyo 100-6150 (JP)
(72) Inventor: BHATTACHARJEE, Sushmit, 80687 Munich (DE); MUTIKAINEN, Jari, 80687 Munich (DE); SAMA, Malla Reddy, 80687 Munich (DE); MINOKUCHI, Atsushi, Tokyo, 100-6150 (JP)
(74) Representative: Viering, Jentschura & Partner mbB Patent- und Rechtsanwälte

(57) **Abstract**

According to one embodiment, a method is described for communicating traffic having multiple traffic components which differ in their required quality of service over the control plane of a mobile radio communication network for providing a communication service to a mobile terminal, comprising communicating traffic between the mobile radio communication network and the mobile terminal using multiple signalling radio bearers including the at least one signalling radio bearers, wherein the mobile terminal uses, for each traffic flow for uplink traffic, one of the multiple signalling radio bearers to carry the traffic flow for uplink traffic as indicated by the mobility management entity.

## Description

The present disclosure relates to devices and methods for communicating traffic having multiple traffic components which differ in their required quality of service over the control plane of a mobile radio communication network for providing a communication service to a mobile terminal.

For providing a communication service, multiple traffic components may be necessary that may have different quality of service (QoS) requirements. An example is the provision of a call using the IMS (IP (Internet Protocol) Multimedia Subsystem) which requires SIP (Session Initiation Protocol) signalling as well as the transmission of voice data which typically differ in their required QoS. Different QoS can be provided by using multiple traffic flows, wherein each traffic flow is carried by a respective radio bearer. Still, efficient approaches to handle such scenarios are desirable, e.g. since the usage of the user plane (i.e. data radio bearers) may not be desirable.

According to one embodiment, a method is provided for communicating traffic having multiple traffic components which differ in their required quality of service over the control plane of a mobile radio communication network for providing a communication service to a mobile terminal, comprising:
- a mobility management entity of the mobile radio communication network requesting a radio access network of the mobile radio communication network to set up at least one signalling radio bearer
- the mobility management entity indicating, for each signalling radio bearer of multiple signalling bearers including the at least one signalling bearer, a traffic flow for uplink traffic to be carried by the signalling radio bearer to the mobile terminal, wherein each traffic flow for uplink traffic is associated with a respective quality of service and
- communicating traffic between the mobile radio communication network and the mobile terminal using the multiple signalling radio bearers, wherein the mobile terminal uses, for each traffic flow for uplink traffic, one of the multiple signalling radio bearer to carry the traffic flow for uplink traffic as indicated by the mobility management entity.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system.
- Figure 2: shows a first option for usage of Control Plane CIoT (Cellular to Internet of Things) EPS (Evolved Packet System) optimization.
- Figure 3: shows a second option for usage of Control Plane CIoT EPS optimization.
- Figure 4: shows a flow diagram illustrating a method for communicating traffic having multiple traffic components which differ in their required quality of service over the control plane of a mobile radio communication network for providing a communication service to a mobile terminal.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for communicating traffic having multiple traffic components which differ in their required quality of service over the control plane of a mobile radio communication network for providing a communication service to a mobile terminal, comprising a mobility management entity of the mobile radio communication network requesting a radio access network of the mobile radio communication network to set up at least one signalling radio bearer, the mobility management entity indicating, for each signalling radio bearer of multiple signalling bearers including the at least one signalling bearer, a traffic flow for uplink traffic to be carried by the signalling radio bearer to the mobile terminal, wherein each traffic flow for uplink traffic is associated with a respective quality of service and communicating traffic between the mobile radio communication network and the mobile terminal using the multiple signalling radio bearers, wherein the mobile terminal uses, for each traffic flow for uplink traffic, one of the multiple signalling radio bearers to carry the traffic flow for uplink traffic as indicated by the mobility management entity.
Example 2 is the method of example 1, wherein the mobility management entity requests the at least one signalling radio bearer as one or more additional signalling radio bearers in addition to a default signalling radio bearer setup by default by the radio access network and wherein the multiple signalling radio bearers include the at least one signalling radio bearer and the default signalling radio bearer or wherein the mobility management entity requests the radio access network to set up a plurality of signalling radio bearers and the multiple signalling radio bearers include only the plurality of signalling radio bearers.
Example 3 is the method of example 2, wherein the mobile terminal avoids using the default signalling radio bearer for the communication of the multiple traffic components.
Example 4 is the method of any one of examples 1 to 3, wherein the communication service is a voice call.
Example 5 is the method of any one of examples 1 to 4, wherein the multiple traffic component include signalling traffic and include voice data traffic.
Example 6 is the method of any one of examples 1 to 5, wherein the signalling traffic is Internet Multimedia Subsystem traffic and the voice data traffic is Internet Multimedia Subsystem voice data.
Example 7 is the method of any one of examples 1 to 6, wherein communicating traffic between the mobile radio communication network and the mobile terminal comprises communicating traffic between a core network gateway component of the mobile radio communication network and the mobile terminal.
Example 8 is the method of example 7, wherein the traffic is communicated using Internet Protocol packets and the mobile terminal and the core network gateway component use Internet Protocol destination addresses and/or destination ports to separate the traffic into the traffic components.
Example 9 is the method of example 7, wherein the traffic is communicated using non-Internet Protocol communication and the mobile terminal and the core network gateway component use a traffic type to separate the traffic into the traffic components.
Example 10 is the method of example 9, wherein the traffic type is a communication protocol according to which data of the traffic are configured.
Example 11 is the method of any one of examples 1 to 10, wherein the mobility management entity of the mobile radio communication network requests the radio access network of the mobile radio communication network to set up the at least one signalling radio bearer using one or more identifications of one or more evolved signal radio access bearers for which one or more signalling radio bearers should be set up.
Example 12 is the method of example 11, wherein the method further comprises that the radio access network informs the mobile terminal about a corresponds of identifications of evolved signal radio access bearers and signalling radio bearers and wherein the mobile terminal identifies, for each traffic flow for uplink traffic, one of the multiple signalling radio bearers to carry the traffic flow for uplink traffic using the correspondence.
Example 13 is the method of example 12, wherein the mobile terminal determines, for each traffic flow of uplink traffic, the identification of an evolved signal radio access bearer to be used for carrying the traffic flow from traffic flow template information and determines the signalling radio bearer from the determined identification of an evolved signal radio access bearer using the correspondence.
Example 14 is the method of any one of examples 1 to 13, comprising receiving, by the mobility management entity, an indication from the mobile terminal that the mobile terminal supports usage of multiple signalling radio bearers for communication and, in response to the reception of the indication, the mobility management entity requesting the radio access network of the mobile radio communication network to set up the at least one signalling radio bearer and communicating traffic between the mobile radio communication network and the mobile terminal using the at least one signalling radio bearer.
Example 15 is a communication system, configured to perform the method of any one of examples 1 to 14.

It should be noted that one or more of the features of any of the examples above may be combined with any one of the other examples. In particular, the examples described in context of the device are analogously valid for the method.

According to further embodiments, a computer program and a computer readable medium comprising instructions, which, when executed by a computer, make the computer perform the method of any one of the above Examples are provided.

In the following, various examples will be described in more detail.

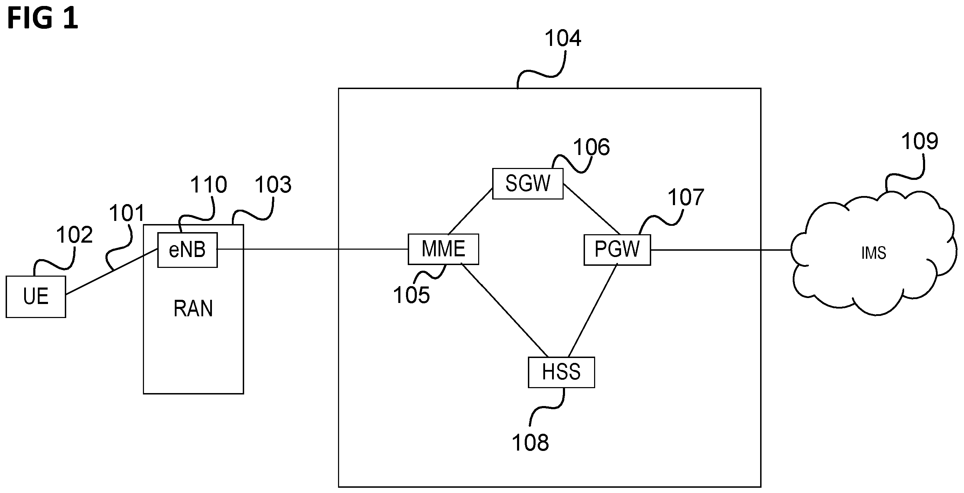

Figure 1 shows a radio communication system 100.

The radio communication system 100 includes a radio communication terminal device 102 (i.e. a mobile terminal, ,in the following also referred to such UE (user equipment)).

Furthermore, the radio communication system 100 includes a Radio Access Network (RAN) 103, which may include a plurality of radio access network nodes, i.e. base stations (eNBs) 110 configured to provide radio access in accordance with LTE (Long Term Evolution) according to 3GPP (Third Generation Partnership Project) or another mobile radio communication standard. Each radio access network node may provide a radio communication with the radio communication terminal device 102 over a respective air interface 101 (which may operate according to different communication standards). It should be noted that the radio access network 103 may include any number of radio access network nodes.

The radio access network 103 is coupled with a core network 104, specifically a 4G core network in this example, i.e. an EPC (Evolved Packet Core) 104.

The 4G core network 104 has an MME (Mobility Management Entity) 105, an SGW (Serving Gateway) 106 and a PGW (Packet Data Gateway) 107 (which may or may not be separated into a PGW - Control Plane and a PGW - User Plane). The 4G core network 104 further includes an HSS (Home Subscriber Server) 108.

Via the mobile radio communication network (formed by the RAN 103 and the 4G core network (EPC) 104) the mobile terminal 102 may in particular use IMS (Internet Protocol Multimedia Subsystem) services offered by an IMS 109, in particular an IMS voice service.

Various embodiments address a case when more than one separate Service Data Flows (SDFs) are needed to provide a communication service to a mobile terminal 102. This for example occur, when the mobile terminal 102 is served by a geostationary satellite (GEO satellite), i.e. the radio access network node 110 serving the mobile terminal 102 (i.e. providing RAN coverage to the mobile terminal 102) is implemented by a GEO satellite. For example, the mobile terminal uses NB(Narrowband)-IoT(Internet of Things) communication via a GEO satellite (i.e. the RAN 103 acts as NB-IoT RAN). In that case two separate Service Data Flows (SDFs) are needed: one to carry IMS signalling and one to carry IMS voice packets. Both these data flows have different requirements in terms of delay and reliability, i.e. different QoS (quality of service) requirements.

If Control Plane (CP) CIoT (Cellular to Internet of Things) EPS (Evolved Packet System) optimization is used, these two SDFs need to be carried over two separate SRBs (signalling radio bearers) over the air interface 101 to meet the respective requirements. If User Plane (UP) CIoT EPS optimization is used, these two SDFs need to be carried over two separate DRBs (data radio bearers) over the air interface 101 to meet the respective requirements.

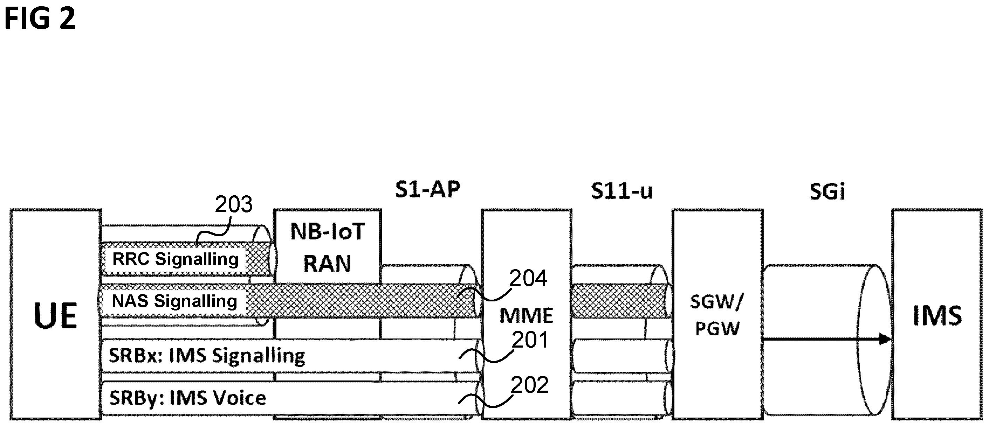

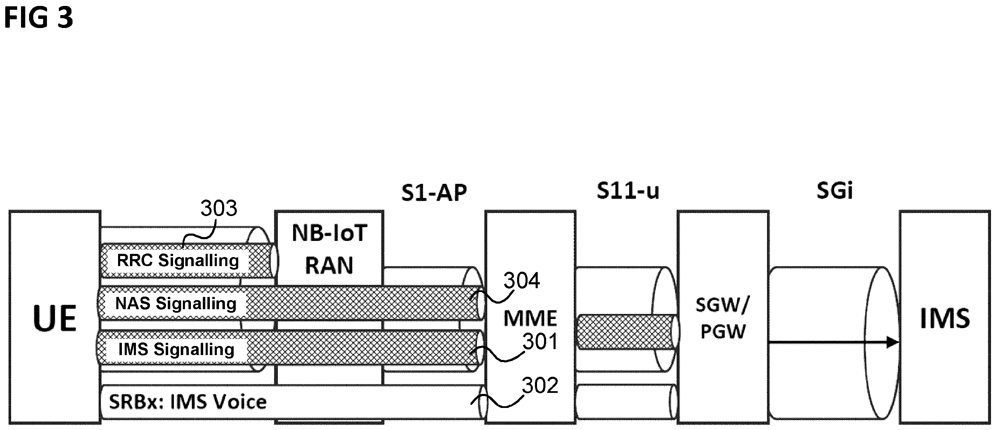

For the case that Control Plane CIoT EPS optimization is used, there are two options to have more than one SRB for IMS voice communication, as illustrated in figure 2 and figure 3.

Figure 2 shows a first option for usage of Control Plane CIoT EPS optimization where two SRBs 201, 202 are introduced (one for IMS signalling and one for IMS voice data) into a 3GPP mobile communication network. RRC (radio resource control) and NAS (non-access stratum) signalling is performed via existing SRBs 203, 204.

Figure 3 shows a second option for usage of Control Plane CIoT EPS optimization where a single SRBs 302 is introduced (for IMS voice data) into a 3GPP mobile communication network. The IMS signalling is done via an existing (i.e. a default) SRB bearer 301. RRC (radio resource control) and NAS (non-access stratum) signalling is performed via existing SRBs 303, 304.

It should be noted that both options require bearer mapping and both options require filters on the UE side to differentiate between different flows.

It should further be noted that it is possible (with either CP or UP CIoT optimization) to use non-IP (Internet Protocol) data: a key issue for carrying voice traffic over NB-IoT NTN via GEO satellite is typically to meet the requirements of data rate and call setup time accounting for round trip time from earth to GEO satellite. Therefore, it may be desirable to us a non-IP PDN (public data network) type instead of an IP PDN type to reduce the signalling overhead in order to meet the requirements. In case of usage of a non-IP PDN type (i.e. a non-IP communication), suitable filters are needed on the UE side for EPS (Evolved Packet System Bearer) bearer mapping (since there is no IP destination address or port).

To have one or more additional SRBs (see e.g. the two options of figure 2 and 3), according to various embodiments, a mechanism is provided what allows the MME 105 to instruct a RAN node (eNB 110) of the RAN 103 to set up (i.e. initiate) one or more SRBs (one to be used for IMS voice data and possibly another one to be used for IMS signalling). In this manner, the network side may initiate the creation of one or more SRBs.

This mechanism uses an E-SRAB (Evolved Signal Radio Access Bearer), which can be seen as an E-RAB (Evolved Signal Radio Access Bearer) but for SRBs, so an E-SRAB is created and included, similar to an E-RAB but for an SRB. Further, an EPS Bearer identity is created and included (e.g. by MME 105) also for SRBs.

A context for the SRB or SRBs can be established in the Initial Context Setup or Create Bearer Request procedure. An E-SRAB configuration is used and included into the Initial Context Setup request message (see 3GPP TS 36.413). The E-SRAB may be created as a newly introduced IE (Information Element) by itself: "E-SRAB to be Setup Item" IE. Alternatively, an E-SRAB ID may be included into the "E-RAB to be Setup Item" IE (already existing in 3GPP).

In both cases, the IE includes an E-SRAB ID (see table 1) which allows the respective eNB 110 to setup the SRB (described in more detail below). For example, an E-SRAB ID=0 corresponds to SRB-x and an E-SRAB ID=1 corresponds to SRB-y.

**Table 1**

| IE/Group Name | Presence | Range | IE type and reference | Semantics description |
|---|---|---|---|---|
| E-SRAB ID | M | | INTEGER (0..1, ...) | |

It should be noted that this mechanism may also be applied to a hybrid scenario where one traffic flow (IMS Signalling) uses CP based optimization and other (voice media) uses UP based optimization. In such scenario the "Initial Context Setup" or "Bearer Setup" request/response may include both E-RAB and E-SRAB. It is also possible to create an E-SRAB with "Initial Context Setup" procedure, and an E-RAB with "Bearer Setup" procedure.

So, a radio access bearer identity, namely an E-SRAB ID, is created also for SRBs. The epsBearerIdentity (according to in 3GPP TS 36.331) and the SRAB identity (E-SRAB ID) do not need to have a 1-to-1 correspondence, e.g. multiple EPS bearers could be mapped to a single SRB.

This eps-BearerIdentity is in particular included in the SRB-ToADDModList in the RadioResourceConfigDedicated IE in the RRC Connection Reconfiguration message (sent from the RAN 103, i.e. the respective RAN node, to the UE 102). The same eps-BearerIdentity in NAS communication to the UE 102, e.g. in particular in in the TFT (Traffic Flow Templates).

In the following, an excerpt of the RadioResourceConfigDedicated information element (IE) is given (see 3GPP TS 36.331). The IE RadioResourceConfigDedicated is used to setup, modify and/or release radio bearers, to modify the MAC (medium access control) main configuration, to modify the SPS (semi persistent scheduling) configuration and to modify dedicated physical configuration. According to various embodiments, the underlined part is added/modified.

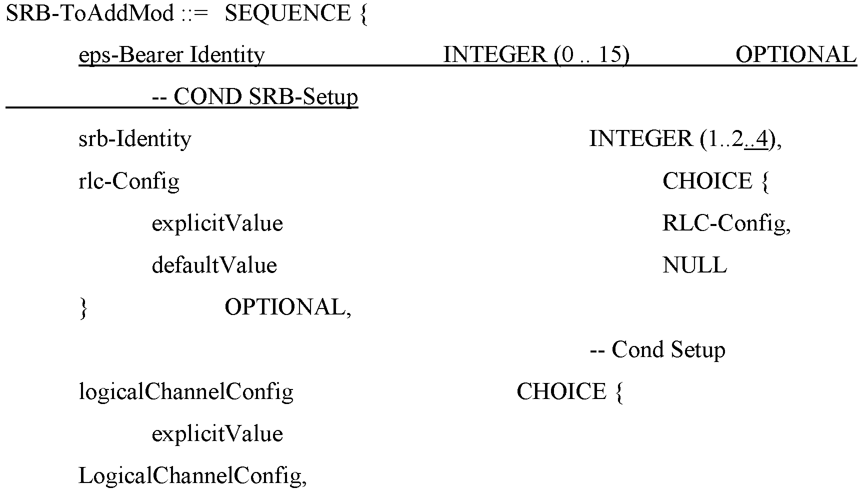

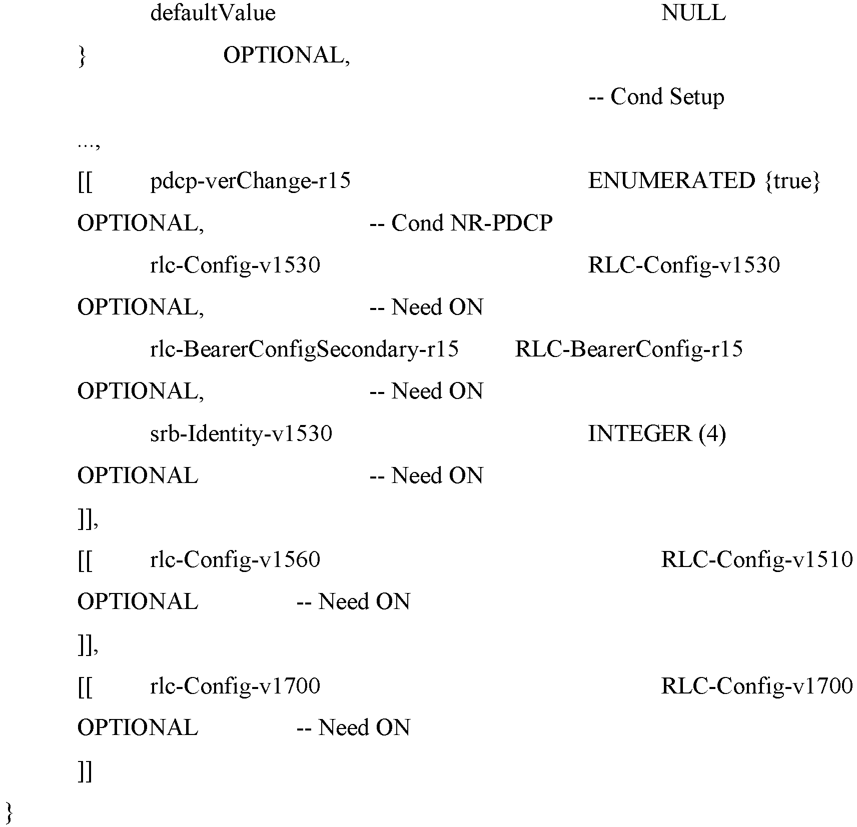

So, multiple SRBs can be created and there each SRB is mapped to an E-SRAB. So, by assigning traffic to the SRBs (e.g. IMS signalling traffic to one SRB and IMS voice data to another SRB), i.e. having a traffic flow per type of traffic (signalling or voice data) and carrying each traffic flow by a respective SRB (and, by the mapping of SRB to E-SRAB, an EPS bearer), a QoS mapping of traffic can be performed, i.e. different QoS requirements of the different traffic types can be fulfilled.

Further, the Traffic flow template (TFT) information element (according to 3GPP TS 24.008) is updated to include separation in the filters for different traffic flows (to provide separation of different SRBs (mapped to identities, i.e. the TFT is associated with an EPS bearer ID and given to the UE when the EPS bearer (and the SRB) is created), e.g. to have a TFT Filter for carrying voice traffic in addition to IMS signalling over NB IoT NTN via GEO satellite connecting to EPC.

If IP traffic is used (i.e. an IP type PDN connection), this separation can be done based on the destination IP address and port of the traffic:
- When the MME 105 initiates the creation of a (default) bearer for SIP traffic (i.e. IMS signalling traffic), the MME 105 indicates the EPS-Bearer-ID=x and the UL TFT matching the SIP traffic (i.e. IP address of the P-CSCF (Proxy Call Session Control Function)).
- When the MME 105 initiates the creation a dedicated bearer for media traffic, the MME 105 indicates EPS-Bearer-ID=y and the UL TFT matching the voice media (e.g. IP address of the IMS-AGW (Access Media Gateway) in the UL TFT to the UE 102.
- In the UL direction, the UE 102 maps the UL traffic based on the TFT to the EPS-Bearer-ID and EPS bearer ID to the corresponding SRB (as indicated in the RRC request from the respective eNB 110).
- In the DL direction, the PGW 107 maps the DL traffic to the corresponding EPS-Bearer-ID as configured by the MME 105. The eNB 110 maps the DL traffic to the corresponding SRB as configured by the MME 105.

The priority of scheduling of the different SRBs can be as follows:
- The priority of scheduling between the SRBs (SRBx vs SRBy) is for example hardcoded in the UE 102 (in UL direction) and eNB 110 (in DL direction).
- For example, the SRBx has a higher scheduling priority than SRBy, and SRBx is used for IMS signalling and SRBy for media.
- If only one SRB is introduced in 3GPP, the existing SRBs are shared with all NAS/RRC traffic and IMS signalling, and the newly introduced SRBx can be used for RTP/RTCP voice media.

The above approaches are applicable to the case that Control Plane CIoT EPS optimization is used.

It should be noted that while the approaches given herein have been described in context of an NTN use case, they may also be applied to other use cases such as for example sensing (e.g. according to ISAC (Integrated Sensing and Communication).

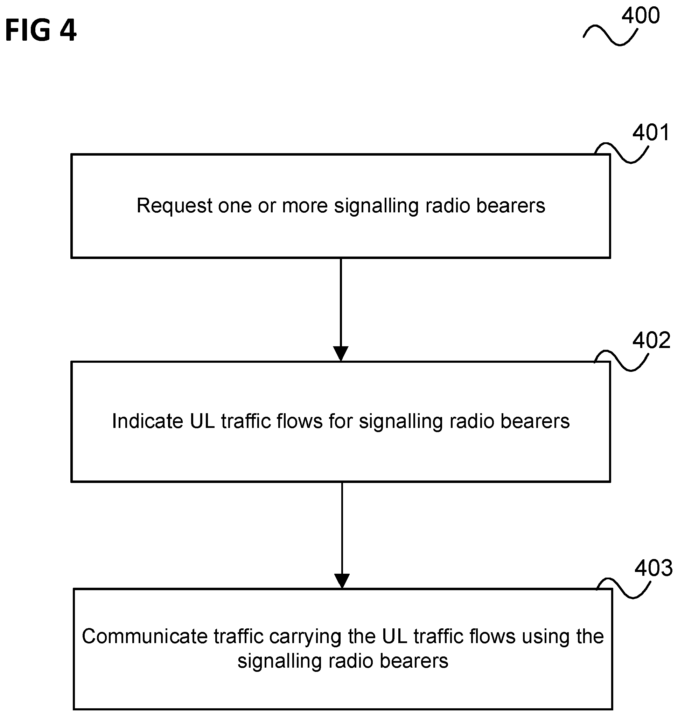

In summary, according to various embodiments, a method is provided as illustrated in figure 4.

Figure 4 shows a flow diagram 400 illustrating a method for communicating traffic having multiple traffic components which differ in their required quality of service over the control plane of a mobile radio communication network for providing a communication service to a mobile terminal.

In 401, a mobility management entity of the mobile radio communication network requests a radio access network of the mobile radio communication network to set up at least one signalling radio bearer.

In 402, the mobility management entity indicates, for each signalling radio bearer of multiple signalling bearers including the at least one signalling bearer, a traffic flow for uplink traffic to be carried by the signalling radio bearer to the mobile terminal, wherein each traffic flow for uplink traffic is associated with a respective quality of service.

In 403, traffic is communicated between the mobile radio communication network and the mobile terminal using the multiple signalling radio bearers, wherein the mobile terminal uses, for each traffic flow for uplink traffic, one of the multiple signalling radio bearers to carry the traffic flow for uplink traffic as indicated by the mobility management.

According to various embodiments, in other words, multiple SRBs are used for providing a communication service over the control plane to enable multiple QoS for different traffic components.

According to various embodiments, EPS bearer identities are created and included for potentially new SRBs and the SRBs are mapped to the EPS bearers. Separation and prioritization of SRBs can be performed based on traffic flows. A base station (eNB) may be triggered to initiate SRBs, e.g. E-SRABs and/or EPS Bearer identity may be created and included into a RRC connection reconfiguration request sent to the base station. Different SRBs may be separated according to their mapping to identities. Separation of traffic components may be done based on traffic type, i.e. a mobile terminal or a core network gateway component may determine based on traffic type to which traffic component a part of traffic (i.e. traffic data to be sent) belongs.

The approach of figure 4 allows mapping of different SRBs to appropriate traffic flows according to QoS requirements. Further, embodiments allow mapping different SRBs to respective EPS bearers. In particular, dedicated bearers can be used for communication over NB-IoT.

It should be noted that 401, 402 and 403 may be carried out in response to a capability indication provided by the mobile terminal indicating that it supports usage of multiple signalling radio bearers for communication.

The method is performed by a mobile communication system, i.e. one or more components of a mobile communication system, e.g. according to 4G, in particular according to 3GPP.

The core network gateway component is for example a Packet Data Gateway.

The components of the mobile communication system may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for communicating traffic having multiple traffic components which differ in their required quality of service over the control plane of a mobile radio communication network for providing a communication service to a mobile terminal, comprising:
a mobility management entity of the mobile radio communication network requesting a radio access network of the mobile radio communication network to set up at least one signalling radio bearer;
the mobility management entity indicating, for each signalling radio bearer of multiple signalling bearers including the at least one signalling bearer, a traffic flow for uplink traffic to be carried by the signalling radio bearer to the mobile terminal, wherein each traffic flow for uplink traffic is associated with a respective quality of service;
communicating traffic between the mobile radio communication network and the mobile terminal using the multiple signalling radio bearers, wherein the mobile terminal uses, for each traffic flow for uplink traffic, one of the multiple signalling radio bearers to carry the traffic flow for uplink traffic as indicated by the mobility management entity.

2. The method of claim 1, wherein the mobility management entity requests the at least one signalling radio bearer as one or more additional signalling radio bearers in addition to a default signalling radio bearer setup by default by the radio access network and wherein the multiple signalling radio bearers include the at least one signalling radio bearer and the default signalling radio bearer or wherein the mobility management entity requests the radio access network to set up a plurality of signalling radio bearers and the multiple signalling radio bearers include only the plurality of signalling radio bearers.

3. The method of claim 2, wherein the mobile terminal avoids using the default signalling radio bearer for the communication of the multiple traffic components.

4. The method of any one of claims 1 to 3, wherein the communication service is a voice call.

5. The method of any one of claims 1 to 4, wherein the multiple traffic component include signalling traffic and include voice data traffic.

6. The method of any one of claims 1 to 5, wherein the signalling traffic is Internet Multimedia Subsystem traffic and the voice data traffic is Internet Multimedia Subsystem voice data.

7. The method of any one of claims 1 to 6, wherein communicating traffic between the mobile radio communication network and the mobile terminal comprises communicating traffic between a core network gateway component of the mobile radio communication network and the mobile terminal.

8. The method of claim 7, wherein the traffic is communicated using Internet Protocol packets and the mobile terminal and the core network gateway component use Internet Protocol destination addresses and/or destination ports to separate the traffic into the traffic components.

9. The method of claim 7, wherein the traffic is communicated using non-Internet Protocol communication and the mobile terminal and the core network gateway component use a traffic type to separate the traffic into the traffic components.

10. The method of claim 9, wherein the traffic type is a communication protocol according to which data of the traffic are configured.

11. The method of any one of claims 1 to 10, wherein the mobility management entity of the mobile radio communication network requests the radio access network of the mobile radio communication network to set up the at least one signalling radio bearer using one or more identifications of one or more evolved signal radio access bearers for which one or more signalling radio bearers should be set up.

12. The method of claim 11, wherein the method further comprises that the radio access network informs the mobile terminal about a corresponds of identifications of evolved signal radio access bearers and signalling radio bearers and wherein the mobile terminal identifies, for each traffic flow for uplink traffic, one of the multiple signalling radio bearers to carry the traffic flow for uplink traffic using the correspondence.

13. The method of claim 12, wherein the mobile terminal determines, for each traffic flow of uplink traffic, the identification of an evolved signal radio access bearer to be used for carrying the traffic flow from traffic flow template information and determines the signalling radio bearer from the determined identification of an evolved signal radio access bearer using the correspondence.

14. The method of any one of claims 1 to 13, comprising receiving, by the mobility management entity, an indication from the mobile terminal that the mobile terminal supports usage of multiple signalling radio bearers for communication and, in response to the reception of the indication, the mobility management entity requesting the radio access network of the mobile radio communication network to set up the at least one signalling radio bearer and communicating traffic between the mobile radio communication network and the mobile terminal using the at least one signalling radio bearer.

15. A communication system, configured to perform the method of any one of claims 1 to 14.

## Amended claims

### Amended claims in accordance with Rule 137(2) EPC.

1. A method for communicating traffic having multiple traffic components which differ in their required quality of service over the control plane of a mobile radio communication network for providing a communication service to a mobile terminal (102), comprising:
a mobility management entity (105) of the mobile radio communication network requesting a radio access network of the mobile radio communication network to set up at least one signalling radio bearer (201, 202, 302);
the mobility management entity (105) indicating, for each signalling radio bearer of multiple signalling radio bearers (201-204, 301-304) including the at least one signalling radio bearer (201, 202, 302), a traffic flow for uplink traffic to be carried by the signalling radio bearer to the mobile terminal (102), wherein each traffic flow for uplink traffic is associated with a respective quality of service;
communicating traffic between the mobile radio communication network and the mobile terminal (102) using the multiple signalling radio bearers (201-204, 301-304), wherein the mobile terminal (102) uses, for each traffic flow for uplink traffic, one of the multiple signalling radio bearers (201-204, 301-304) to carry the traffic flow for uplink traffic as indicated by the mobility management entity (105).

2. The method of claim 1, wherein the mobility management entity (105) requests the at least one signalling radio bearer (201, 202, 302) as one or more additional signalling radio bearers in addition to a default signalling radio bearer setup by default by the radio access network and wherein the multiple signalling radio bearers (201-204, 301-304) include the at least one signalling radio bearer (201, 202, 302) and the default signalling radio bearer or wherein the mobility management entity (105) requests the radio access network to set up a plurality of signalling radio bearers and the multiple signalling radio bearers (201-204, 301-304) include only the plurality of signalling radio bearers.

3. The method of claim 2, wherein the mobile terminal (102) avoids using the default signalling radio bearer for the communication of the multiple traffic components.

4. The method of any one of claims 1 to 3, wherein the communication service is a voice call.

5. The method of any one of claims 1 to 4, wherein the multiple traffic component include signalling traffic and include voice data traffic.

6. The method of any one of claims 1 to 5, wherein the signalling traffic is Internet Multimedia Subsystem traffic and the voice data traffic is Internet Multimedia Subsystem voice data.

7. The method of any one of claims 1 to 6, wherein communicating traffic between the mobile radio communication network and the mobile terminal (102) comprises communicating traffic between a core network gateway component of the mobile radio communication network and the mobile terminal (102).

8. The method of claim 7, wherein the traffic is communicated using Internet Protocol packets and the mobile terminal (102) and the core network gateway component use Internet Protocol destination addresses and/or destination ports to separate the traffic into the traffic components.

9. The method of claim 7, wherein the traffic is communicated using non-Internet Protocol communication and the mobile terminal (102) and the core network gateway component use a traffic type to separate the traffic into the traffic components.

10. The method of claim 9, wherein the traffic type is a communication protocol according to which data of the traffic are configured.

11. The method of any one of claims 1 to 10, wherein the mobility management entity (105) of the mobile radio communication network requests the radio access network of the mobile radio communication network to set up the at least one signalling radio bearer (201, 202, 302) using one or more identifications of one or more evolved signal radio access bearers for which one or more signalling radio bearers should be set up.

12. The method of claim 11, wherein the method further comprises that the radio access network informs the mobile terminal (102) about a corresponds of identifications of evolved signal radio access bearers and signalling radio bearers and wherein the mobile terminal (102) identifies, for each traffic flow for uplink traffic, one of the multiple signalling radio bearers (201-204, 301-304) to carry the traffic flow for uplink traffic using the correspondence.

13. The method of claim 12, wherein the mobile terminal (102) determines, for each traffic flow of uplink traffic, the identification of an evolved signal radio access bearer to be used for carrying the traffic flow from traffic flow template information and determines the signalling radio bearer from the determined identification of an evolved signal radio access bearer using the correspondence.

14. The method of any one of claims 1 to 13, comprising receiving, by the mobility management entity (105), an indication from the mobile terminal (102) that the mobile terminal (102) supports usage of multiple signalling radio bearers (201-204, 301-304) for communication and, in response to the reception of the indication, the mobility management entity (105) requesting the radio access network of the mobile radio communication network to set up the at least one signalling radio bearer (201, 202, 302) and communicating traffic between the mobile radio communication network and the mobile terminal (102) using the at least one signalling radio bearer (201, 202, 302).

15. A communication system, configured to perform the method of any one of claims 1 to 14.
